# EUROPEAN PATENT SPECIFICATION

(11) **EP 3 493 049 B1**
(45) Date of publication and mention of the grant of the patent: **03.05.2023**
(21) Application number: 18209797.2
(22) Date of filing: 03.12.2018
(51) Int. Cl.: G06F 3/16

(54) **SPEECH INTERACTIVE CONTROL SYSTEM AND CONTROL METHOD**
SPRACHINTERAKTIVES STEUERUNGSSYSTEM UND STEUERUNGSVERFAHREN
SYSTÈME DE COMMANDE VOCALE INTERACTIVE ET PROCÉDÉ DE COMMANDE

(30) Priority: 04.12.2017 JP 2017232696
(43) Date of publication of application: 05.06.2019
(73) Proprietor: SHARP Kabushiki Kaisha, Sakai-ku Sakai City Osaka 590-8522 (JP)
(72) Inventor: KANZAKI, Akihiro, Sakai City Osaka 590-8522 (JP)
(74) Representative: Müller Hoffmann & Partner

(56) References cited:
- EP-A1- 3 093 842
- US-A1- 2008 059 188
- US-A1- 2016 225 372
- US-A1- 2017 092 270

## Description

### BACKGROUND

### 1. Field

The present disclosure relates to a speech interactive control system, and a control method.

### 2. Description of the Related Art

There are known devices capable of providing information to users by multiple ways, such as audio and images, as conventional technology. For example, Japanese Unexamined Patent Application Publication No. 2014-002383 (published January 9, 2014) discloses a terminal device that outputs response messages in response to a user speaking, by audio or text. However, although the terminal device in Japanese Unexamined Patent Application Publication No. 2014-002383 (published January 9, 2014) has a configuration enabling information to be provided to the user by audio or text format, there is a problem in that the information is not able to be provided to the user in an easy-to-comprehend form based on the content of the information.
As to a system according to US 2017/092270 A1, a user provides spoken instructions, and a virtual assistant that is triggered resolves the spoken instructions into one or more tasks. In an example, the user asks for a TV episode, and such episode is started.
US 2008/059188 A1 discloses a speech recognition technique wherein instead of only reacting to "turn on" for turning on a TV set, other wording such as "hey, lets watch TV", and "I wanna watch TV", and the like, is allowed and works as well.
In the case of a doubt, a feedback question is asked by the system.
US 2016/225372 A1 relates to a smart home connected device, wherein a plurality of topic-specific phrases is defined as to a single topic, such as a problem with a TV set, with loudspeakers, and the like.
EP 3093842 A1 discloses to provide a dialogue screen upon speech input. This dialogue screen might include image data, such as maps, obtained from the Internet.

It is desirable to provide an external control device that provides information to users in an easy-to-comprehend form.

### SUMMARY

According to an aspect of the disclosure, an external control device, receives audio input information from a user accepted by an audio input/output device, analyzes the audio input information, and obtains related information relating to the audio input information, determining whether or not to include an image in response information to be provided to the user, based on contents of the obtained related information, and in a case of determining to include the image in the response information, effects control to display the image on a display device.

According to an aspect of the disclosure, a control method, includes receiving audio input information from a user accepted by an audio input/output device, analyzing the audio input information, and obtaining related information relating to the audio input information, determining whether or not to include an image in response information to be provided to the user, based on contents of the obtained related information, and in a case of determining to include the image in the response information to be provided to the user, effecting control to display the image on a display device.

### BRIEF DESCRIPTION OF THE DRAWINGS

Fig. 1 is a schematic diagram illustrating an overview of a speech interactive control system according to a first embodiment of the present disclosure;
Fig. 2 is a block diagram illustrating an example of major portions of the speech interactive control system according to the first embodiment of the present disclosure;
Fig. 3 is a sequence diagram illustrating a series of processing in the speech interactive control system according to the first embodiment of the present disclosure;
Fig. 4 is a flowchart illustrating an example of processing executed by the audio input/output device according to the first embodiment of the present disclosure;
Fig. 5 is a schematic diagram illustrating an overview of a speech interactive control system according to a second embodiment of the present disclosure;
Fig. 6 is a sequence diagram illustrating a series of processing in the speech interactive control system according to the second embodiment of the present disclosure;
Fig. 7 is a schematic diagram illustrating an overview of a speech interactive control system according to a third embodiment of the present disclosure;
Fig. 8 is a sequence diagram illustrating a series of processing in the speech interactive control system according to the third embodiment of the present disclosure; and
Fig. 9 is a flowchart illustrating an example of processing executed by the audio input/output device according to the third embodiment of the present disclosure.

### DESCRIPTION OF THE EMBODIMENTS

### First Embodiment

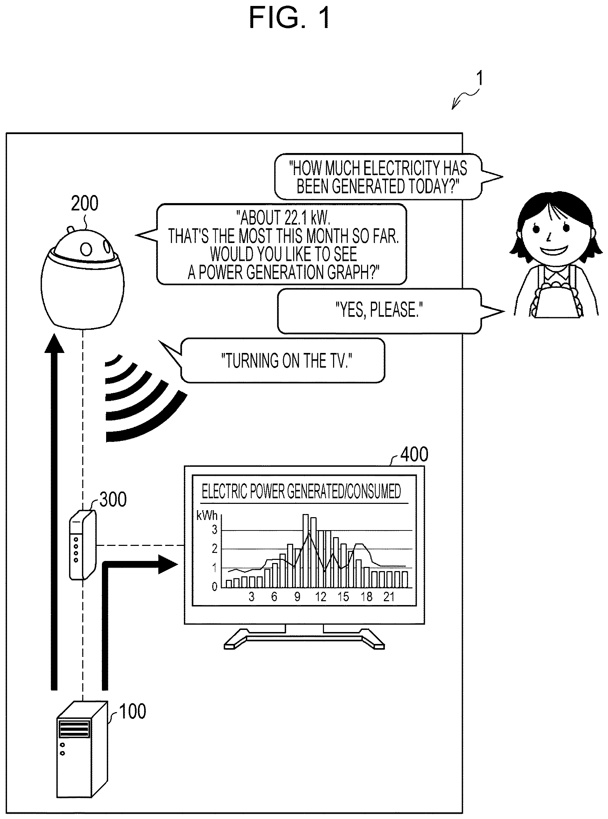

A embodiment of the present disclosure will be described in detail with reference to Figs. 1 through 4. Configuration of Speech Interactive Control System

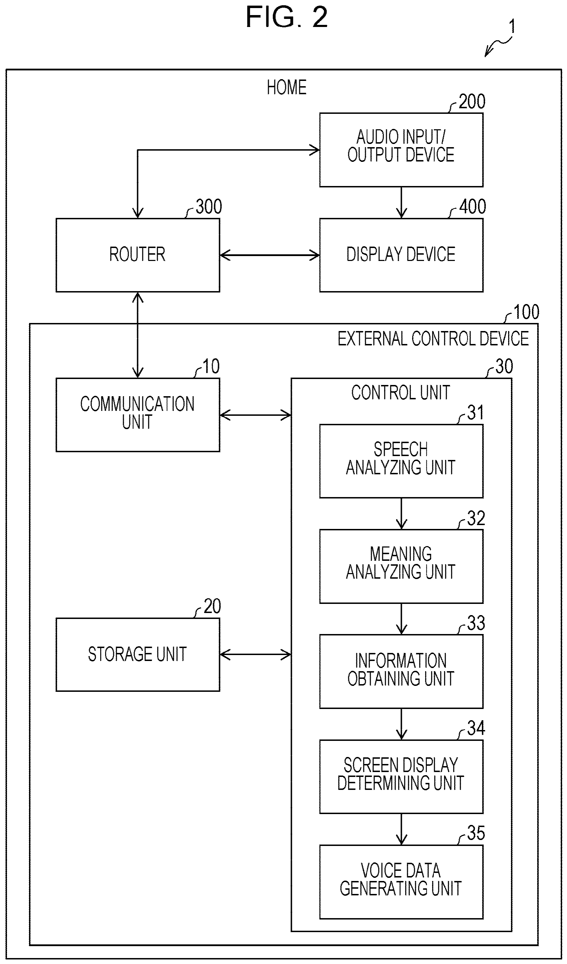

The configuration of an speech interactive control system 1 according to the present disclosure will be described with reference to Figs. 1 and 2. Fig. 1 is a schematic diagram illustrating an overview of the speech interactive control system 1.

The speech interactive control system 1 has an external control device 100, an audio input/output device 200, a router 300, and a display device 400, as illustrated in Fig. 1. The various types of devices making up the speech interactive control system 1 are all disposed within the same room or same building. Hereinafter, description will be made by way of an example where the various types of devices are installed in the home of a user.

The speech interactive control system 1 outputs response information, in response to audio input information of the user that the audio input/output device 200 has accepted, as audio from the audio input/output device 200, which is exemplified in Fig. 1. In a case where the response information is content that is suitable for providing by images, the speech interactive control system 1 displays images on the display device 400 such as graphs, lists, maps (pictorial diagrams), moving images, or the like.

The external control device 100 is a server that is communicable with the audio input/output device 200 and display device 400 via the router 300. The external control device 100 may be a home energy management system (HEMS) server that manages the amount of electricity generated by a solar generator device installed on the home, electric power consumption by electric appliances within the home, and so forth, for example. The external control device 100 receives user audio input information that the audio input/output device 200 has accepted, and analyzes this audio input information. The external control device 100 obtains related information that is related to the audio input information, based on the contents that have been analyzed. The external control device 100 also determines whether or not to include images in response information to be provided to the user, based on the content of the related information that has been obtained. For example, in a case where image information such as graphs, lists, maps (pictorial diagrams), moving images, or the like are included in the obtained related information, the user will more readily comprehend the content by providing through images, rather than providing by audio. Accordingly, in a case where information suitable for display by images is included in the related information, the external control device 100 determines to include images in the response information to be provided to the user. In a case of having determined to include images in the response information, the external control device 100 may outputs part of the response information to be provided to the user from the audio input/output device 200 by audio, and also effects control to display images on the display device 400. Note that images to be provided to the user may be included in the related information that has been obtained, of may have been generated by the external control device 100 from the related information that has been obtained.

Note that before displaying an image on the display device 400, the external control device 100 outputs a proposal message inquiring of the user whether or not to display the image on the display device 400. In this case, the image is displayed on the display device 400 after having received audio input information from the user to the effect that display of the image on the display device 400 is permitted, from the audio input/output device 200. The external control device 100 also outputs at least part of the response information from the audio input/output device 200 as audio information, to be provided to the user. Configuration of External Control Device 100

The configuration of the external control device 100 will be described with reference to Fig. 2. Fig. 2 is a block diagram illustrating an example of major portions of the speech interactive control system 1. An example will be described below where the external control device 100 is a HEMS server that manages electric power consumption and the like of electric appliances within the home.

The external control device 100 includes a communication unit 10, a storage unit 20, and a control unit 30. The control unit 30 includes a speech analyzing unit 31, a meaning analyzing unit 32, an information obtaining unit 33, an image display determining unit 34, and a voice data generating unit 35.

The communication unit 10 exchanges various types of data between the audio input/output device 200 and the display device 400 via the router 300. The storage unit 20 stores various types of information relating to amount of electricity generated and electric power consumption within the home, and so forth. The information stored in the storage unit 20 may include images of graphs indicating transition of amounts of electricity generated and electric power consumed, and so forth.

The control unit 30 centrally controls each part of the external control device 100. The speech analyzing unit 31 performs speech analysis on audio input information received from the audio input/output device 200 (i.e., audio data including the voice of the user), and generates text data. The meaning analyzing unit 32 performs meaning analysis by sectioning the text data generated by the speech analyzing unit 31 into appropriate phrases and so forth, and transmits the analysis results to the information obtaining unit 33. Note that the speech analysis and meaning analysis performed at the speech analyzing unit 31 and meaning analyzing unit 32 may be carried out by techniques used in conventional speech recognition technology.

The information obtaining unit 33 obtains related information related to the audio input information that the external control device 100 has accepted from the audio input/output device 200, from the storage unit 20, based on the contents analyzed by the speech analyzing unit 31 and meaning analyzing unit 32. The information obtaining unit 33 outputs the related information obtained from the storage unit 20 to the image display determining unit 34.

The image display determining unit 34 determines whether or not to include images in response information to be provided to the user, based on the contents of the related information output from the information obtaining unit 33. That is to say, based on the contents of the related information obtained from the information obtaining unit 33, the image display determining unit 34 determines whether to provide the response information to the user by audio alone, or whether to provide the response information to the user by images along with audio. For example, in a case where the related information obtained from the information obtaining unit 33 includes information suitable for being provided by images, such as graphs, lists, maps (pictorial diagrams), moving images, or the like, the image display determining unit 34 determines that images are to be included in the response information. In this case, the image display determining unit 34 outputs to the voice data generating unit 35 response information including information indicating the location (e.g., a URL, hereinafter described as being a URL) of the image information stored in the storage unit 20. On the other hand, in a case where no information suitable for providing by images is included in the related information obtained from the information obtaining unit 33, the image display determining unit 34 determines that images are not to be included in the response information. In this case, the image display determining unit 34 outputs only audio information to the voice data generating unit 35 as response information.

The voice data generating unit 35 generates audio data (i.e., voice data), based on the audio information included in the response information output from the image display determining unit 34. The method by which the voice data generating unit 35 generates voice data may be a technique used to generate response messages in conventional interactive robots. The voice data generating unit 35 transmits the generated response message to the audio input/output device 200 via the communication unit 10.

The audio input/output device 200 is a device of performing input/output of audio between itself and the user of the speech interactive control system 1. The audio input/output device 200 is capable of communication with the external control device 100 and display device 400 via the router 300 and so forth. Note that communication between the audio input/output device 200 and the display device 400 may be communication via the router 300, or may be direct communication that does not go through the router 300, such as infrared (IR) communication or the like. The audio input/output device 200 transmits audio accepted from the user to the external control device 100 as audio input information. The audio input/output device 200 provides the voice data received from the external control device 100 by audio, as response information corresponding to the audio input information. Further, the audio input/output device 200 can operate the display device 400 based on various types of instructions received from the external control device 100. For example, the audio input/output device 200 can perform an operation to turn on the power of the display device 400, based on instructions from the external control device 100. The audio input/output device 200 also transmits URLs of image information stored in the storage unit 20 to the display device 400, based on instructions from the external control device 100.

The router 300 is a relay device that relays communication paths, and is a router used in general communication.

The display device 400 is capable of communication with the external control device 100 and the audio input/output device 200, and is a display device that is capable of displaying images of response information. The display device 400 turns on in accordance with instructions from the audio input/output device 200. In a case of having obtained a URL of image information from the audio input/output device 200, the display device 400 accesses the external control device 100, obtains image information from the external control device 100, and displays images such as graphs. The display device 400 may be a television that is capable of external communication, for example. Series of Processing in Speech Interactive Control System

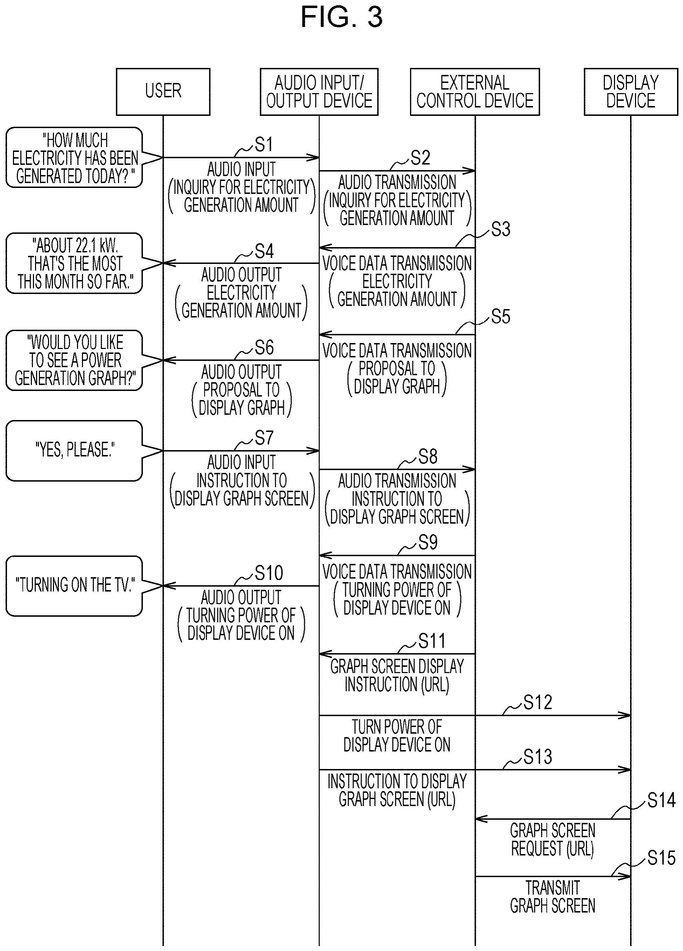

The series of processing at the speech interactive control system 1 exemplarily illustrated in Fig. 1 will be described with reference to Fig. 3. First, upon the user of the speech interactive control system 1 saying "How much electricity has been generated today?" what has been spoken is input to the audio input/output device 200 (S1: audio input (inquiry for electricity generation amount)). The audio input/output device 200 then transmits the audio input information accepted in S1 to the external control device 100 (S2: audio transmission (inquiry for electricity generation amount)).

The external control device 100 analyzes the audio input information received from the audio input/output device 200 using the speech analyzing unit 31 and meaning analyzing unit 32. Further, the information obtaining unit 33 obtains the amount of electricity generated to day from the storage unit 20, as related information related to the audio input information, based on the analysis results. The external control device 100 then generates voice data, "About 22.1 kW. That's the most this month so far." from the amount of electricity generated today obtained by the information obtaining unit 33, using the voice data generating unit 35 (S3: voice data transmission (electricity generation amount)), and transmits this to the audio input/output device 200. The audio input/output device 200 provides the received voice data to the user as audio (S4: audio output (electricity generation amount)).

After S4, the image display determining unit 34 of the external control device 100 determines whether or not to include an image in response information, based on the content of related information related to the amount of electricity generated today, that the information obtaining unit 33 has obtained from the storage unit 20 in S3. Also, in a case of determining that an image is to be included, the external control device 100 uses the voice data generating unit 35 to generate a proposal message proposing displaying of a graph indicating the amount of electricity generated today on the display device 400 as an image, and transmits this to the audio input/output device 200 (S5: voice data transmission (proposal to display graph)). The proposal message is voice data, "Would you like to see a power generation graph?" The audio input/output device 200 provides the user with the received voice data as audio (S6: audio output (proposal to display graph)).

After S6, upon the user saying "Yes, please" as an approval message permitting the image to be displayed on the display device 400, what has been spoken is input to the audio input/output device 200 as audio input information (S7: audio input (instruction to display graph screen)). The audio input/output device 200 then transmits the audio input information accepted in S7 to the external control device 100 (S8: audio transmission (instruction to display graph screen)).

The external control device 100 analyzes the audio input information received from the audio input/output device 200 using the speech analyzing unit 31 and meaning analyzing unit 32. Upon comprehending that the audio input information includes an approval message from the analysis results, the voice data generating unit 35 generates voice data "Turning on the TV." to turn the power of the display device 400 on. The external control device 100 transmits the generated voice data to the audio input/output device 200 (S9: voice data transmission (turning power of display device on)). The audio input/output device 200 provides the received voice data to the user as audio (S10: audio output (turning power of display device on)).

After S9, the control unit 30 of the external control device 100 transmits an instruction to the audio input/output device 200 to display an image of a graph indicating the amount of electricity generated today on the display device 400, along with the URL for this graph (S11: graph screen display instruction (URL)). Upon receiving the instruction for displaying an image of the graph and the URL of this graph, the audio input/output device 200 operates the display device 400 and turns the power on (S12: turn power of display device on)). The audio input/output device 200 further transmits a display instruction for the graph and the URL of this graph to the display device 400 (S13: instruction to display graph screen (URL)). The display device 400 that has received the display instruction for the graph and the URL of this graph from the audio input/output device 200 requests the external control device 100 for the graph image specified by the URL (S14: graph screen request (URL)). The external control device 100 transmits the graph screen specified by the URL to the display device 400 in response to this request, so as to be displayed (S15: transmit graph screen).

According to the above-described processing, the speech interactive control system 1 can effect control at the external control device 100 to determine to include an image in response information corresponding to audio input information that the audio input/output device 200 has accepted so as to be provided, and display this image on the display device 400.

### Flow of Processing Executed by Audio Input/Output Device

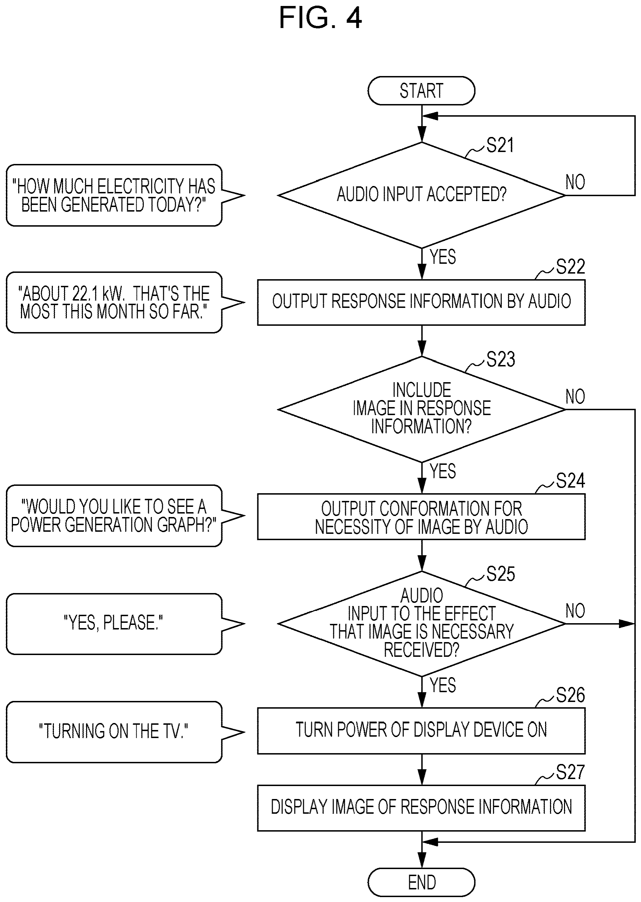

The flow of processing that the audio input/output device 200 executes in the present embodiment will be described with reference to Fig. 4. First, upon the audio input/output device 200 accepting audio input from the user of the speech interactive control system 1 (YES in S21), the audio input information from this audio input is transmitted to the external control device 100. The audio input/output device 200 receives voice data generated at the external control device 100 as response information corresponding to the audio input information. The audio input/output device 200 then outputs the received voice data as audio, as response information (S22).

After S22, the audio input/output device 200 executes processing in accordance with the result of the external control device 100 having determined whether or not to include an image in the response information (S23). In a case of the external control device 100 having determined to include an image in the response information (YES in S23), the audio input/output device 200 executes the processing of S24. On the other hand, in a case of the external control device 100 having determined not to include an image in the response information (NO in S23), the audio input/output device 200 ends the series of processing.

In S24, upon having received voice data, where a proposal message inquiring of the user regarding whether or not to display an image on the display device 400 has been generated at the external control device 100, the audio input/output device 200 outputs this proposal message as audio (S24). Thereafter, the audio input/output device 200 accepts an approval message from the user to the effect of permitting display of the image on the display device 400. The external control device 100 then determines whether or not the audio input/output device 200 has accepted a proposal message (S25). In a case of having accepted a proposal message (YES in S25), the flow advances to S26. On the other hand, in a case where no proposal message has been accepted (NO in S25), the series of processing ends.

In S26, the audio input/output device 200 that has received the voice data to the effect to turn the power of the display device 400 on from the external control device 100 outputs this voice data as audio (S27). Thereafter, upon receiving an instruction from the external control device 100 to display the image of the response information on the display device 400, the audio input/output device 200 operates the display device 400 based on this instruction, and displays the image of the response information on the display device 400 (S27).

According to the processing described above, the audio input/output device 200 can provide the user with response information corresponding to the audio input information by the external control device 100 as audio. Further, in a case where an image can be provided with the response information, the display device 400 can be operated to display this image.

Thus, in the speech interactive control system 1, the external control device 100 can determine whether or not to include an image in response information corresponding to what the user has spoken to the audio input/output device 200 as audio input. Further, in a case where the external control device 100 has determined that an image is to be provided for the response information, this image can be displayed on the display device 400. Accordingly, information that is suitable for provision by image is provided by an image, and other information can be provided as audio from the audio input/output device, for example. Accordingly, an external control device that has excellent usability, which can provide information in a format that the user can readily comprehend, can be provided.

### Second Embodiment

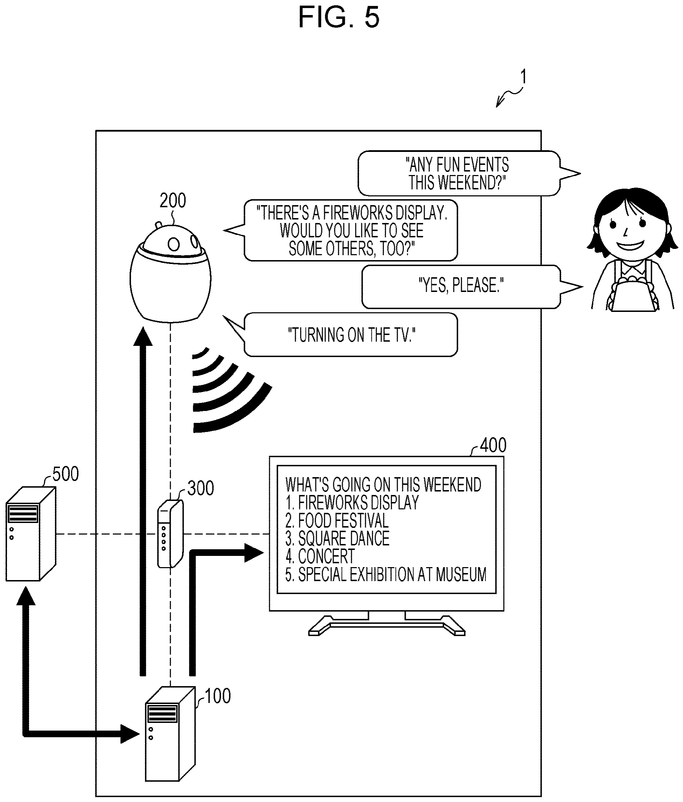

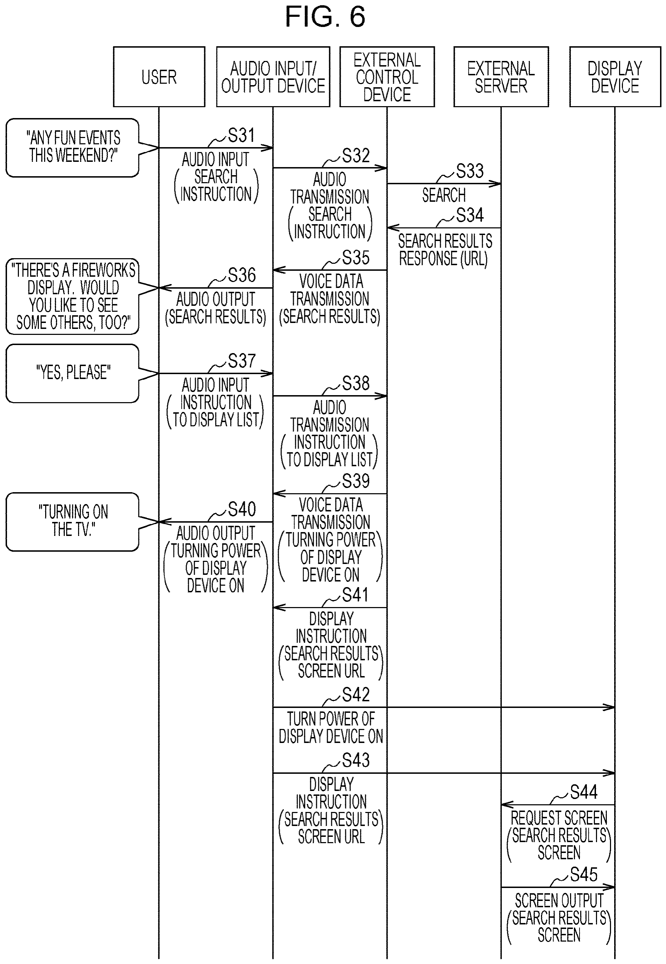

A second embodiment of the present disclosure will be described with reference to Figs. 5 and 6. Note that members having the same functions as members described in the first embodiment will be denoted by the same reference numerals and description thereof will be omitted, for sake of convenience.

### Configuration of Speech Interactive Control System

The configuration of the speech interactive control system 1 according to the present embodiment will be described with reference to Fig. 5. Fig. 5 is a schematic diagram illustrating an overview of the speech interactive control system 1.

The speech interactive control system 1 according to the present embodiment is the same as the above-described first embodiment with regard to the basic configuration, but the configuration partially differs, as illustrated in Fig. 5. In the present embodiment, related information related to the audio input information that the user has input to the audio input/output device 200 is kept by an external server 500 provided at a different location from the location where the audio input/output device 200, display device 400, and external control device 100 are installed. In this configuration, the external control device 100 may obtain related information from the external server 500 based on the contents of having analyzed the audio input information. Different external servers 500, which are the destination from which the external control device 100 obtains related information, may be selected depending on the type of related information that the external control device 100 needs. For example, the external control device 100 may obtain related information from a different external server 500 for each object of searching.

The external control device 100 according to the present embodiment is the same as in the first embodiment with regard to the basic configuration, but the configuration partially differs. In the present embodiment, the external control device 100 may obtain related information from the external server 500 based on the contents of having analyzed the audio input information that the user has input to the audio input/output device 200. The configuration is such that the obtained related information is provided to the user via the audio input/output device 200 and display device 400.

The display device 400 according to the present embodiment is the same as in the first embodiment with regard to the basic configuration, but the configuration partially differs. In the present embodiment, the display device 400 can communicate with the external server 500 in accordance with operations made at the audio input/output device 200, and display images received from this external server 500.

### Series of Processing in Speech Interactive Control System

The series of processing at the speech interactive control system 1 exemplarily illustrated in Fig. 5 will be described with reference to Fig. 6. First, upon the user of the speech interactive control system 1 saying "Any fun events this weekend?" what has been spoken is input to the audio input/output device 200 (S31: audio input (search instruction)). The audio input/output device 200 then transmits the audio input information accepted in S31 to the external control device 100 (S32: audio transmission (search instruction)).

The external control device 100 analyzes the audio input information received from the audio input/output device 200 using the speech analyzing unit 31 and meaning analyzing unit 32. Further, based on the analysis results, the information obtaining unit 33 searches the external server 500 for events being held this weekend (S33: search). At the external control device 100, upon receiving search results as information including a URL from the external server 500 (S34: search results response (URL)), the image display determining unit 34 determines whether or not to include an image in the response information, based on the contents of the search results. In a case of determining to include an image, the external control device 100 uses the voice data generating unit 35 to generate, from the search results, voice data "There's a fireworks display. Would you like to see some others, too?" including a proposal message proposing to display on the display device 400 a list events being held over the weekend, and transmits this to the audio input/output device 200 (S35: voice data transmission (search results)). The audio input/output device 200 provides the received voice data to the user as audio (S36: audio output (search results)).

After S36, upon the user saying "Yes, please" as an approval message, what has been spoken is input to the audio input/output device 200 as audio input information S37: audio input (instruction to display list)). The audio input/output device 200 then transmits the audio input information accepted in S37 to the external control device 100 (S38: audio input (instruction to display list)).

The external control device 100 analyzes the audio input information received from the audio input/output device 200 using the speech analyzing unit 31 and meaning analyzing unit 32. Upon comprehending that the audio input information includes an approval message from the analysis results, the voice data generating unit 35 generates voice data "Turning on the TV." To turn the power of the display device 400 on. The external control device 100 transmits the generated voice data to the audio input/output device 200 (S39: voice data transmission (turning power of display device on)). The audio input/output device 200 provides the received voice data to the user as audio (S40: audio output (turning power of display device on)).

After S40, the control unit 30 of the external control device 100 transmits an instruction to the audio input/output device 200 to display a list of events being held over the weekend on the display device 400 as an image, along with the URL for this list (S41: display instruction (search results screen URL)). Upon receiving the instruction for displaying a search results screen including a list of events and the URL of this list, the audio input/output device 200 operates the display device 400 and turns the power on (S42: turn power of display device on)). The audio input/output device 200 further transmits a display instruction for the list and the URL of this list to the display device 400 (S43: display instruction (search results screen URL)). The display device 400 that has received the display instruction for the list and the URL of this list from the audio input/output device 200 requests the external server 500 for the search results screen specified by the URL (S44: screen request (search results screen)). The external server 500 transmits the search results screen specified by the URL to the display device 400 in response to this request, so as to be displayed (S45: screen output (search results screen)).

According to the above-described processing, the speech interactive control system 1 may obtain, from the external server 500, related information related to the audio input information that the audio input/output device 200 has accepted. Further, in a case of having determined to provide response information as an image, the speech interactive control system 1 can effect control at the external control device 100 for the display device 400 to obtain this image from the external server 500 and display it.

### Flow of Processing Executed by Audio Input/Output Device

In the present embodiment, the flow of processing that the audio input/output device 200 executes is the same as in Fig. 4 described in the first embodiment. The reason is that there is no change in the processing that the audio input/output device 200 performs, since the audio input/output device 200 does not communicate with the external server 500.

### Third Embodiment

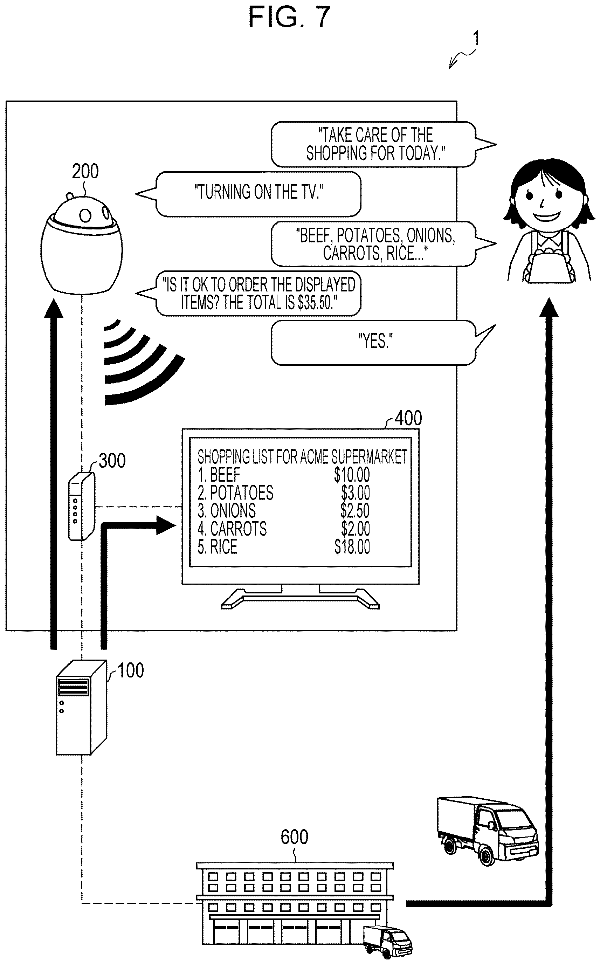

A third embodiment of the present disclosure will be described with reference to Figs. 7 through 9. Note that members having the same functions as members described in the above embodiments embodiment will be denoted by the same reference numerals and description thereof will be omitted, for sake of convenience.

### Configuration of Speech Interactive Control System

The speech interactive control system 1 according to the present embodiment will be described with reference to Fig. 7. Fig. 7 is a schematic diagram illustrating an overview of the speech interactive control system 1.

The speech interactive control system 1 according to the present embodiment is the same as the above-described first embodiment with regard to the basic configuration, but the configuration partially differs, as illustrated in Fig. 7. In the present embodiment, the speech interactive control system 1 is configured such that the external control device 100 is provided at a different location from the location where the audio input/output device 200, router 300, and display device 400 are installed. Further, the external control device 100 is a server that provides an Internet online shopping service where goods are sold over the Internet. The speech interactive control system 1 outputs a screen relating to the Internet online shopping service provided by the external control device 100 to the display device 400 as an image. The user can order goods using the Internet online shopping service by performing input/output of audio with the audio input/output device 200.

The external control device 100 is the same as in the above-described first embodiment with regard to the basic configuration, but the configuration partially differs. In the present embodiment, the external control device 100 is a server that provides an Internet online shopping service where goods are sold over the Internet. In the example in Fig. 7, the external control device 100 is connected to the audio input/output device 200 and display device 400 via the router 300, but is not restricted to communication via the router 300 as long as the configuration enables communication. For example, an arrangement may be made where the external control device 100 is connected with the audio input/output device 200 by a cellular telephone line via a base station, and is connected with the display device 400 via the router 300.

The external control device 100 is further communicably connected with a warehouse 600 that stores goods. Upon items to order accepted from the user has been finalized, the external control device 100 transmits the items to order to the warehouse 600.

The warehouse 600 stores various types of goods handled by the Internet online shopping service provided by the external control device 100. Upon receiving the items to order from the external control device 100, the warehouse 600 picks and boxes the goods in accordance with the items to order, and ships the goods to the user who has placed the order.

### Series of Processing in Speech Interactive Control System

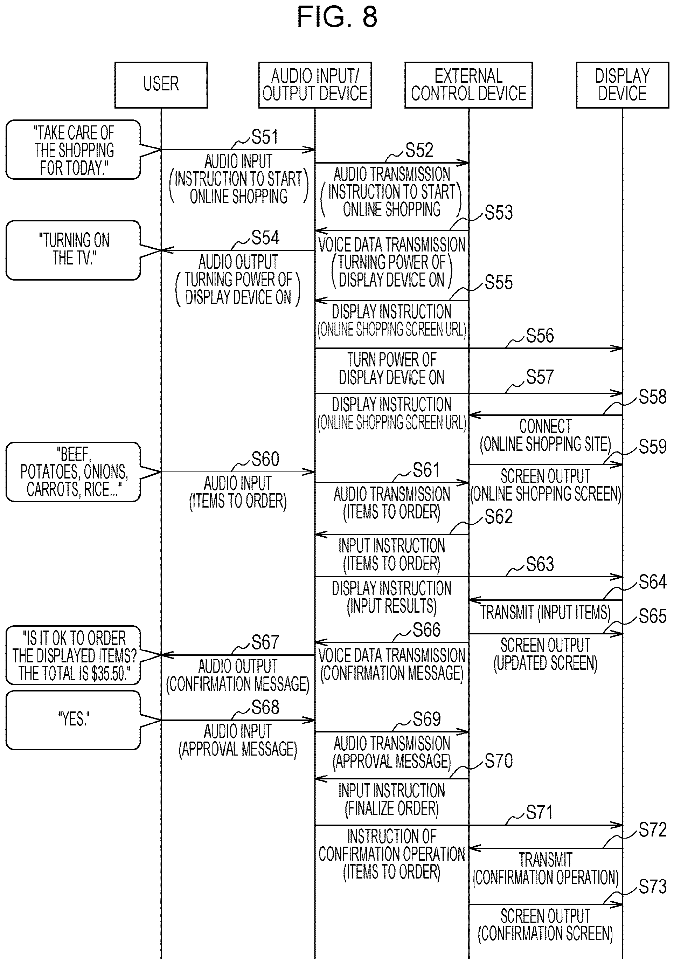

The series of processing at the speech interactive control system 1 exemplarily illustrated in Fig. 7 will be described with reference to Fig. 8. First, upon the user of the speech interactive control system 1 saying "Take care of the shopping for today." what has been spoken is input as audio input information to the audio input/output device 200 (S51: audio input (instruction to start online shopping)). The audio input/output device 200 then transmits the audio input information accepted in S51 to the external control device 100 (S52: audio transmission (instruction to start online shopping)).

The external control device 100 analyzes the audio input information received from the audio input/output device 200 using the speech analyzing unit 31 and meaning analyzing unit 32. Further, upon comprehending from the analysis results that the audio input information includes an instruction to start online shopping, the image display determining unit 34 of the external control device 100 determines that display of an image using the display device 400 is necessary. The voice data generating unit 35 then generates voice data "Turning on the TV." to turn the power of the display device 400 on. The external control device 100 transmits the generated voice data to the audio input/output device 200 (S53: voice data transmission (turning power of display device on)). The audio input/output device 200 provides the received voice data to the user as audio (S54: audio output (turning power of display device on)).

After S54, the external control device 100 transmits an instruction to the audio input/output device 200 to display a screen for the Internet online shopping service on the display device 400 as an image, along with the URL for this screen (S55: display instruction (online shopping screen URL)). Upon receiving the instruction for displaying the screen of the Internet online shopping service and the URL of this screen, the audio input/output device 200 operates the display device 400 and turns the power on (S56: turn power of display device on)). The audio input/output device 200 further transmits a display instruction for the screen and the URL of this screen to the display device 400 (S57: display instruction (online shopping URL)). The display device 400 that has received the display instruction for the screen and the URL of this screen from the audio input/output device 200 connects to the URL of the Internet online shopping service that the external control device 100 provides, in accordance with the display instruction (S58: connect (online shopping site)). The external control device 100 transmits the screen of the Internet online shopping service specified by the URL to the display device 400 in accordance with the connection, to be displayed (S59: screen output (online shopping site)).

After the screen for the Internet online shopping service is displayed on the display device 400 in S59, the user confirms the contents of display, and speaks the items to order, such as "beef, potatoes, onions, carrots, rice...". When the user speaks, what has been said is input to the audio input/output device 200 as audio input information (S60: audio input (items to order)). The audio input/output device 200 then transmits the audio input information accepted in S60 to the external control device 100 (S61: audio transmission (items to order)).

The external control device 100 analyzes the audio input information received from the audio input/output device 200 in S61, using the speech analyzing unit 31 and meaning analyzing unit 32. Further, upon comprehending from the analysis results that the audio input information includes items to order, the control unit 30 transmits an instruction to the audio input/output device 200 for the display device 400 to transmit the items to order to the external control device 100 (S62: input instruction (items to order)). When receiving an input instruction from the external control device 100, the audio input/output device 200 transmits the input items from the user including the items to order, along with an instruction to display on the display device 400 a screen in which the items for input have been reflected, to the display device 400 (S63: display instruction (input results)). Upon having received the input items and the instruction, the display device 400 transmits the input items to the external control device 100 (S64: transmit (input items)). The external control device 100 that has received the input items updates the screen based on these input items, and transmits an updated screen to the display device 400. The display device 400 displays the updated screen that has been received (S65: screen output (updated screen)).

After S65, the external control device 100 uses the voice data generating unit 35 to generate voice data including a confirmation message for confirmation of whether or not to finalize the order with the items to order indicated by the updated screen. Further, the external control device 100 transmits voice data including the configuration message to the audio input/output device 200 (S66: voice data transmission (confirmation message)). When receiving the voice data including the confirmation message from the external control device 100, the audio input/output device 200 outputs this voice data (S67: audio output (confirmation message)). According to the example illustrated in Figs. 7 and 8, the audio input/output device 200 outputs audio including the confirmation message "Is it OK to order the displayed items? The total is $35.50."

After S67, when the user says "Yes." what has been spoken is input to the audio input/output device 200 as audio input information (S68: audio input (approval message)). The audio input/output device 200 then transmits the audio input information accepted in S68 to the external control device 100 (S69: audio input (approval message)).

The external control device 100 analyzes the audio input information received from the audio input/output device 200 using the speech analyzing unit 31 and meaning analyzing unit 32. Upon comprehending that the audio input information includes an approval message from the analysis results, the external control device 100 transmits to the audio input/output device 200 an operation instruction to cause the display device 400 to perform operations for finalizing the items to order (S70: input instruction (finalize order)). Upon receiving an operation instruction from the external control device 100, the audio input/output device 200 instructs the display device 400 to finalize the items to order in accordance with the operation instruction (S71: instruction of confirmation operation (items to order)). Upon receiving the instruction from the audio input/output device 200, the display device 400 performs operations on the screen based on this instruction, and makes transmission to the external control device 100 to the effect of finalizing the items to order (S72: transmit (confirmation operation)). When receiving the instruction from the display device 400, the external control device 100 executes processing to finalize the items to order, transmits to the display device 400 a screen making notification to the effect that the order has been finalized, to be displayed (S73: screen output (confirmation screen)).

According to the above-described processing, the user of the speech interactive control system 1 can use the Internet online shipping service that the external control device 100 provides, using the audio input/output device 200 and display device 400. More specifically, various types of operations of the audio input/output device 200 can be executed by audio input, to order goods from the external control device 100.

### Flow of Processing Executed by Audio Input/Output Device

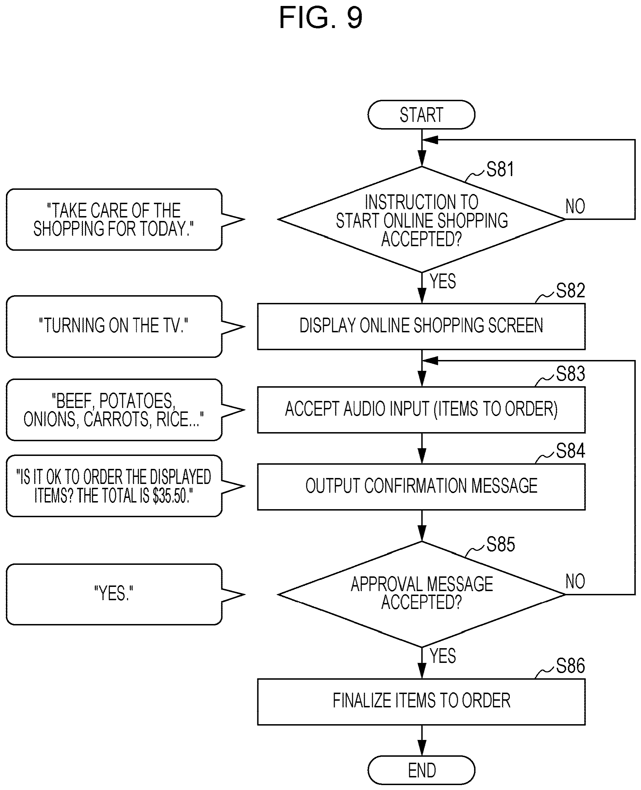

The flow of processing that the audio input/output device 200 executes in the present embodiment will be described with reference to Fig. 9. First, the audio input/output device 200 accepts an online shopping start instruction by audio input from the user (YES in S81). The audio input/output device 200 transmits audio input information from this audio input to the external control device 100, and receives response information corresponding to this audio input information. The response information includes an instruction to turn the power of the display device 400 on, voice data corresponding to this instruction, and an instruction to display the site URL of the Internet online shopping service that the external control device 100 provides. After having output the voice data by audio, the audio input/output device 200 turns the power of the display device 400 on in accordance with the received instruction. The audio input/output device 200 then causes the display device 400 to connect to the site URL of the Internet online shopping service, and display the online shopping screen (S82).

Thereafter, the audio input/output device 200 accepts the order that the user has vocally input, in accordance with the contents of the online order screen displayed on the display device 400 (S83), and transmits the audio input information relating to the order to the external control device 100. The audio input/output device 200 receives voice data corresponding to the confirmation message confirming with the user whether or not to finalize the order with the current items to order, as the response information responding to the audio input information. The audio input/output device 200 the outputs the received voice data by audio (S84).

After S84, the audio input/output device 200 determines whether or not an approval message approving of finalization of the items to order has been accepted by audio input from the user (S85). In a case of having accepted an approval message (YES in S85), the audio input/output device 200 transmits audio input information relating to the approval message to the external control device 100, and receives an instruction for the display device 400 to perform operations to finalize the order, as response information responding to this audio input information. The audio input/output device 200 causes the display device 400 to perform operations to finalize the order, thereby finalizing the items to order (S86). On the other hand, if an approval message has not been accepted (NO in S85), the audio input/output device 200 executes the processing of S83 through S85 again, accepting further orders.

According to the above-described processing, the audio input/output device 200 can perform various types of operations regarding the Internet online shopping service that the external control device 100 provides, by audio input. Also, the audio input/output device 200 can output confirmation messages or the like as response information corresponding to audio input information by audio, and can display online shopping screens or the like by images.

According to the above-described processing, the speech interactive control system 1 can determine whether or not to include an image in response information corresponding to contents of audio input information that the user has input by audio, out of information input/output regarding the Internet online shopping service that the external control device 100 provides. Further, in a case where the external control device 100 has determined to include an image in response information, this image can be displayed at the display device 400.

### Modifications

Although a configuration has been described in the embodiments where the external control device 100 is made up of a single server, an arrangement may be made where the external control device 100 is a combination of multiple servers. For example, the external control device 100 may be configured of a server that can communicate with the audio input/output device 200, and a different server that can communicate with the display device 400.

Although a configuration has been described in the embodiments where the audio input/output device 200 transmits audio input information accepted from the user to the external control device 100, and the external control device 100 analyzes the audio input information, an arrangement may be made where speech analysis of the audio input information is performed at the audio input/output device 200, and meaning analysis is performed at the external control device 100 on the results of the speech analysis using the meaning analyzing unit 32. Further, the audio input/output device 200 may have all configurations of the external control device 100. Summarization

An external control device (100) according to a first aspect of the present disclosure receives audio input information from a user accepted by an audio input/output device (200), analyzes the audio input information and obtains related information relating to the audio input information, determines whether or not to include an image in response information to be provided to the user, based on contents of the obtained related information, and in a case of determining to include the image in the response information, effects control to display the image on a display device (400).

According to this configuration, the external control device can determine whether or not to include an image in response information corresponding to contents of audio input performed by the user, and in a case of determining to include the image, display the image on the display device. Accordingly, information that is suitable to be presented by images can be presented by images. Thus, an external control device that has excellent usability, which can provide information in a format that the user can readily comprehend, can be provided.

In a case of having determined to include the image in the response information, the external control device (100) may output part of the response information by audio information from the audio input/output device (200).

According to this configuration, part of the response information can be provided by audio. Accordingly, information that is suitable to be provided by images can be provided by images, and other information can be provided as audio from the audio input/output device, for example. The user can confirm response information by audio along with images, so information can be provided in a format that the user can readily comprehend. Usability is excellent in that time for making confirmation can be reduced, and so forth.

In the external control device (100), a message inquiring of the user whether or not to display the image on the display device (400) may be output from the audio input/output device (200), and in a case where the user permits display of the image on the display device, control may be effected to display the image on the display device.

According to this configuration, in a case where the user has given permission, the external control device can provide response information by images.

In the external control device (100), the external control device may obtain the related information from an external server (500).

According to this configuration, the external control device can obtain related information from an external server, and thus can suitably obtain related information even if the external control device itself does not store the related information.

A speech interactive control system (1) according to a second aspect of the present disclosure includes the above-described external control device (100); an audio input/output device (200) configured to accept audio input information from a user; and a display device (400) configured to display an image obtained by the external control device.

According to this configuration, advantages the same as those of the first aspect can be obtained.

A control method according to a third aspect of the present disclosure includes receiving audio input information from a user accepted by an audio input/output device (200); analyzing the audio input information, and obtaining related information relating to the audio input information; determining whether or not to include an image in response information to be provided to the user, based on contents of the obtained related information; and in a case of determining to include the image in the response information, effecting control to display the image on a display device (400).

According to this configuration, advantages the same as those of the first aspect can be obtained.

The external control device 100 according to the embodiments of the present disclosure may be realized by a computer. In this case, a control program of the external control device 100 causing the external control device 100 to be realized by a computer, by causing the computer to operate as the components of the external control device 100 (software elements), and a computer-readable recording medium in which the control program is recorded, are within the scope of the present disclosure.

The present disclosure is not restricted to the above-described embodiments. Various modifications may be made within the scope laid forth in the claims.

It should be understood by those skilled in the art that various modifications, combinations, sub-combinations and alterations may occur depending on design requirements and other factors insofar as they are within the scope of the appended claims.

## Claims

1. A speech interactive control system, comprising:
an external control device (100),
an audio input/output device (200) configured to accept audio input information from a user; and
a display device (400) configured to display an image;
said external control device receiving audio input information from the user accepted by the audio input/output device (200),
analyzing the audio input information, and obtaining, from a storage unit (20) of the external control device or from an external server (500), related information relating to the audio input information, wherein if the related information is to be obtained from the external server (500), a respective search request is first sent from the external control device (100) to the external server (500); **characterised in that**:
said external control device further
determining whether or not to include an image in response information to be provided to the user, based on contents of the obtained related information, and
in a case of determining to include the image in the response information, outputting information including a URL of the image, to the audio input/output device (200), receiving a request from a display device (400), which is separate from the audio input/output device (200), as to the URL, and effecting control to display the image by the display device (400), by transmitting the image to the display device (400),
wherein, in a case of having determined to include the image in the response information, part of the response information is output by audio from the audio input/output device, and
wherein the audio input/output device (200) outputs a message requesting permission for displaying the image on the display device as output from the audio input/output device,
and wherein, in a case where the user permits display of the image on the display device, control is effected to display the image on the display device by the audio input/output device (200) first sending an instruction to the display device (400) to turn the power of the display device (400) on, and thereafter sending an instruction to display the image to the display device (400).

2. The external control device (100) according to claim 1, wherein the related information is an amount of electricity information.

3. A control method, comprising:
receiving audio input information from a user accepted by an audio input/output device (200);
analyzing the audio input information, and obtaining, from a storage unit (20) of the external control device or from an external server (500), related information relating to the audio input information, wherein if the related information is to be obtained from the external server (500), a respective search request is first sent from the external control device (100) to the external server (500); **characterised in that**:
determining whether or not to include an image in response information to be provided to the user, based on contents of the obtained related information; and
in a case of determining to include the image in the response information to be provided to a user, audio input/output device (200), receiving a request from a display device (400), which is separate from the audio input/output device (200), as to the URL, and effecting control to display the image by the display device (400), by transmitting the image to the display device (400),
wherein, in a case of having determined to include the image in the response information, part of the response information is output by audio from the audio input/output device, and
wherein the audio input/output device (200) outputs a message requesting permission for displaying the image on the display device as output from the audio input/output device,
and wherein, in a case where the user permits display of the image on the display device, control is effected to display the image on the display device by the audio input/output device (200) first sending an instruction to the display device (400) to turn the power of the display device (400) on, and thereafter sending an instruction to display the image to the display device (400).

## Patentansprüche

1. Sprachinteraktives Steuerungssystem, aufweisend:
eine externe Steuerungsvorrichtung (100),
eine Audio-Eingabe/Ausgabevorrichtung (200), die dafür konfiguriert ist, Audio-Eingabeinformationen von einem Nutzer zu akzeptieren; und
eine Anzeigevorrichtung (400), die dafür konfiguriert ist, ein Bild anzuzeigen;
wobei die externe Steuerungsvorrichtung von der Audio-Eingabe/Ausgabevorrichtung (200) akzeptierte Audio-Eingabeinformationen von dem Nutzer empfängt,
die Audio-Eingabeinformationen analysiert und von einer Speichereinheit (20) der externen Steuerungsvorrichtung oder von einem externen Server (500) zugehörige Informationen in Bezug auf die Audio-Eingabeinformationen erhält, wobei, falls die zugehörigen Informationen vom externen Server (500) erhalten werden sollen, eine jeweilige Suchanfrage zuerst von der externen Steuerungsvorrichtung (100) an den externen Server (500) gesendet wird;
**dadurch gekennzeichnet, dass**:
die externe Steuerungsvorrichtung ferner
basierend auf Inhalten der erhaltenen, zugehörigen Informationen bestimmt, ob ein Bild in den Antwortinformationen, die dem Nutzer bereitgestellt werden sollen, einzubeziehen ist oder nicht, und,
falls bestimmt wird, dass das Bild in den Antwortinformationen einzubeziehen ist, Informationen einschließlich einer URL des Bildes an die Audio-Eingabe/Ausgabevorrichtung (200) ausgibt, eine Anfrage von einer Anzeigevorrichtung (400), die von der Audio-Eingabe/Ausgabevorrichtung (200) getrennt ist, in Bezug auf die URL empfängt und eine Steuerung ausführt, um das Bild mittels der Anzeigevorrichtung (400) anzuzeigen, indem das Bild zur Anzeigevorrichtung (400) übertragen wird,
wobei, falls bestimmt wurde, dass das Bild in den Antwortinformationen einzubeziehen ist, ein Teil der Antwortinformationen per Audio von der Audio-Eingabe/Ausgabevorrichtung ausgegeben wird und
wobei die Audio-Eingabe/Ausgabevorrichtung (200) eine Nachricht, die um eine Genehmigung zum Anzeigen des Bildes auf der Anzeigevorrichtung bittet, als Ausgabe von der Audio-Eingabe/Ausgabevorrichtung ausgibt und
wobei, falls der Nutzer eine Anzeige des Bildes auf der Anzeigevorrichtung genehmigt, eine Steuerung ausgeführt wird, um das Bild auf der Anzeigevorrichtung mittels der Audio-Eingabe/Ausgabevorrichtung (200) anzuzeigen, die zuerst eine Anweisung, die Anzeigevorrichtung (400) einzuschalten, an die Anzeigevorrichtung (400) sendet und danach eine Anweisung, das Bild anzuzeigen, an die Anzeigevorrichtung (400) sendet.

2. Externe Steuerungsvorrichtung (100) nach Anspruch 1, wobei die zugehörigen Informationen Strommengeninformationen sind.

3. Steuerungsverfahren, aufweisend:
Empfangen von von einer Audio-Eingabe/Ausgabevorrichtung (200) akzeptierten Audio-Eingabeinformationen von dem Nutzer;
Analysieren der Audio-Eingabeinformationen und Erhalten, von einer Speichereinheit (20) der externen Steuerungsvorrichtung oder von einem externen Server (500), zugehöriger Informationen in Bezug auf die Audio-Eingabeinformationen, wobei, falls die zugehörigen Informationen vom externen Server (500) erhalten werden sollen, eine jeweilige Suchanfrage zuerst von der externen Steuerungsvorrichtung (100) an den externen Server (500) gesendet wird;
**gekennzeichnet durch**:
Bestimmen, ob ein Bild in den Antwortinformationen, die dem Nutzer bereitgestellt werden sollen, einzubeziehen ist oder nicht, basierend auf Inhalten der erhaltenen zugehörigen Informationen; und,
falls bestimmt wird, dass das Bild in den dem Nutzer bereitzustellenden Antwortinformationen einzubeziehen ist, Empfangen einer Anfrage von einer Anzeigevorrichtung (400), die von der Audio-Eingabe/Ausgabevorrichtung (200) getrennt ist, in Bezug auf die URL und Ausführen einer Steuerung, um das Bild mittels der Anzeigevorrichtung (400) anzuzeigen, indem das Bild zur Anzeigevorrichtung (400) übertragen wird,
wobei, falls bestimmt wurde, dass das Bild in den Antwortinformationen einzubeziehen ist, ein Teil der Antwortinformationen per Audio von der Audio-Eingabe/Ausgabevorrichtung ausgegeben wird und
wobei die Audio-Eingabe/Ausgabevorrichtung (200) eine Nachricht, die um eine Genehmigung zum Anzeigen des Bildes auf der Anzeigevorrichtung bittet, als Ausgabe von
der Audio-Eingabe/Ausgabevorrichtung ausgibt und
wobei, falls der Nutzer eine Anzeige des Bildes auf der Anzeigevorrichtung genehmigt, eine Steuerung ausgeführt wird, um das Bild auf der Anzeigevorrichtung mittels der Audio-Eingabe/Ausgabevorrichtung (200) anzuzeigen, die zuerst eine Anweisung, die Anzeigevorrichtung (400) einzuschalten, an die Anzeigevorrichtung (400) sendet und danach eine Anweisung, das Bild anzuzeigen, an die Anzeigevorrichtung (400) sendet.

## Revendications

1. Système de commande vocale interactive, comprenant :
un dispositif de commande externe (100),
un dispositif d'entrée/sortie audio (200) configuré pour accepter des informations d'entrée audio depuis un utilisateur ; et
un dispositif d'affichage (400) configuré pour afficher une image ;
ledit dispositif de commande externe recevant des informations d'entrée audio depuis l'utilisateur accepté par le dispositif d'entrée/sortie audio (200),
analysant des informations d'entrée audio, et obtenant, depuis une unité de stockage (20) du dispositif de commande externe ou depuis un serveur externe (500), des informations connexes relatives aux informations d'entrée audio, dans lequel, si les informations connexes doivent être obtenues depuis le serveur externe (500), une demande de recherche respective est d'abord envoyée depuis le dispositif de commande externe (100) au serveur externe (500) ; **caractérisé en ce que** :
ledit dispositif de commande externe réalisant en outre
la détermination s'il faut ou non inclure une image dans des informations de réponse à fournir à l'utilisateur, sur la base d'un contenu des informations connexes obtenues, et
dans le cas où il est décidé d'inclure l'image dans les informations de réponse, la délivrance d'information incluant un URL de l'image, au dispositif d'entrée/sortie audio (200), la réception d'une demande depuis un dispositif d'affichage (400), qui est distinct du dispositif d'entrée/sortie audio (200), en ce qui concerne l'URL, et l'exécution d'une commande pour afficher l'image par le dispositif d'affichage (400), par la transmission de l'image au dispositif d'affichage (400),
dans lequel, dans le cas où il a été décidé d'inclure l'image dans les informations de réponse, une partie des informations de réponse est délivrée par audio depuis le dispositif d'entrée/sortie audio, et
dans lequel le dispositif d'entrée/sortie audio (200) délivre un message demandant une permission pour afficher l'image sur le dispositif d'affichage en tant que sortie du dispositif d'entrée/sortie audio,
et dans lequel, dans le cas où l'utilisateur permet l'affichage de l'image sur le dispositif d'affichage, une commande est exécutée pour afficher l'image sur le dispositif d'affichage par le dispositif d'entrée/sortie audio (200) d'abord en envoyant une instruction au dispositif d'affichage (400) pour mettre le dispositif d'affichage (400) sous tension, puis en envoyant une instruction pour afficher l'image sur le dispositif d'affichage (400).

2. Système de commande externe (100) selon la revendication 1, dans lequel les informations connexes sont des informations de quantité d'électricité.

3. Procédé de commande, comprenant :
la réception d'informations d'entrée audio depuis un utilisateur accepté par un dispositif d'entrée/sortie audio (200) ;
l'analyse des informations d'entrée audio, et l'obtention, depuis une unité de stockage (20) du dispositif de commande externe ou depuis un serveur externe (500), d'informations connexes relatives aux informations d'entrée audio, dans lequel, si les informations connexes doivent être obtenues depuis le serveur externe (500), une demande de recherche respective est d'abord envoyée depuis le dispositif de commande externe (100) au serveur externe (500) ; **caractérisé par** :
la détermination s'il faut ou non inclure une image dans des informations de réponse à fournir à l'utilisateur, sur la base d'un contenu des informations connexes obtenues ; et
dans le cas où il est décidé d'inclure l'image dans les informations de réponse à fournir à un utilisateur, alors, par un dispositif d'entrée/sortie audio (200), la réception d'une demande, depuis un dispositif d'affichage (400), qui est distinct du dispositif d'entrée/sortie audio (200), en ce qui concerne l'URL, et l'exécution d'une commande pour afficher l'image par le dispositif d'affichage (400), par la transmission de l'image au dispositif d'affichage (400),
dans lequel, dans le cas où il est décidé d'inclure l'image dans les informations de réponse, une partie des informations de réponse est délivrée par audio depuis le dispositif d'entrée/sortie audio, et
dans lequel le dispositif d'entrée/sortie audio (200) délivre un message demandant une permission pour afficher l'image sur le dispositif d'affichage en tant que sortie du dispositif d'entrée/sortie audio,
et dans lequel, dans le cas où l'utilisateur permet l'affichage de l'image sur le dispositif d'affichage, il est exécuté une commande pour afficher l'image sur le dispositif d'affichage par le dispositif d'entrée/sortie audio (200) d'abord en envoyant une instruction au dispositif d'affichage (400) pour mettre le dispositif d'affichage (400) sous tension, puis en envoyant une instruction pour afficher l'image sur le dispositif d'affichage (400).
